# EUROPEAN PATENT APPLICATION

(11) **EP 3 208 319 A1**
(43) Date of publication of application: **23.08.2017**
(21) Application number: 16156508.0
(22) Date of filing: 19.02.2016
(51) Int. Cl.: C09D 133/16, C08F 220/22, C08F 220/34, C08F 220/38, C08F 230/02, C08F 230/08

(54) **AMPHIPHILIC COPOLYMERS WITH MIXED FUNCTIONALITIES**

(71) Applicant: 3M Innovative Properties Company, St. Paul, MN 55133-3427 (US)
(72) Inventor: Schuell, Christoph, 41453 Neuss (DE); Strerath, Christine, 41453 Neuss (DE); Jing, Naiyong, St. Paul, MN Minnesota 55133-3427 (US); Goeb, Siegfried, 41453 Neuss (DE)
(74) Representative: Gabriel, Kiroubagaranne

(57) **Abstract**

The present disclosure relates to an amphiphilic copolymer comprising:
a) repeating monomeric units comprising a pendant zwitterionic moiety;
b) repeating monomeric units comprising a pendant group comprising a fluorine-containing group and at least one heteroatom; and
c) optionally, secondary repeating monomeric units comprising a pendant group comprising a functional group selected from the group consisting of phosphate groups, phosphonate groups, sulfonate groups, alkoxysilane groups, carboxylate groups, and any combinations thereof;
and wherein the repeating monomeric units of the amphiphilic copolymer independently comprise an ethylenically unsaturated polymerizable group selected from the group of (meth)acrylate ester containing groups.

In another aspect, the present disclosure is directed to a protective coating composition comprising:
a) an amphiphilic copolymer as described above, and
b) a solvent comprising water.

## Description

### Technical Field

The present disclosure relates to amphiphilic copolymers and protective and functional coatings derived therefrom, which are useful for protecting surfaces, in particular hard surfaces. The present disclosure also relates to a method of treating a hard surface.

### Background

Many coating formulations, in particular fluorinated compositions, have been described in the art for treating substrates and surfaces to render them either oleophobic (i.e. oil repellent) or hydrophilic (i.e. having high affinity for water). Rare coating compositions imparting both oleophobic and hydrophilic are described e.g. in US-A1-2008/0319153 (Clark et al.) or in US 2014/0048478 (Bal et al.). Surfaces provided with oleophobic and hydrophilic properties may find various applications such as oil-water separation or dirt repellency.

Without contesting the technical advantages associated with the protective coating compositions known in the art, there is still a need for protective coating compositions providing excellent oleophobic and hydrophilic properties and useful to impart easy-to-clean properties to the treated surfaces.

Other advantages of the coating compositions and methods of the disclosure will be apparent from the following description.

### Summary

According to one aspect, the present disclosure relates to an amphiphilic copolymer comprising:
a) repeating monomeric units comprising a pendant zwitterionic moiety;
b) repeating monomeric units comprising a pendant group comprising a fluorine-containing group and at least one heteroatom; and
c) optionally, secondary repeating monomeric units comprising a pendant group comprising a functional group selected from the group consisting of phosphate groups, phosphonate groups, sulfonate groups, alkoxysilane groups, carboxylate groups, and any combinations thereof;
and wherein the repeating monomeric units of the amphiphilic copolymer independently comprise an ethylenically unsaturated polymerizable group selected from the group of (meth)acrylate ester containing groups.

In another aspect, the present disclosure is directed to a protective coating composition comprising:
a) an amphiphilic copolymer as described above, and
b) a solvent comprising water.

According to still another aspect, the present disclosure is directed to a method of manufacturing a copolymer comprising pendant zwitterionic moieties and pendant groups comprising a fluorine-containing group and at least one heteroatom, wherein the zwitterionic moiety comprises a positively charged group selected from quaternary ammonium groups, and a negatively charged group selected from sulfonate groups, and wherein the method comprises the steps of:
a) providing repeating monomeric units comprising pendant groups comprising a fluorine-containing group and at least one heteroatom;
b) providing repeating monomeric units comprising pendant tertiary amines;
c) optionally, providing secondary repeating monomeric units comprising pendant groups comprising a functional group selected from the group consisting of phosphate groups, phosphonate groups, sulfonate groups, alkoxysilane groups, carboxylate groups, and any combinations thereof; wherein the repeating monomeric units of the amphiphilic copolymer independently comprise an ethylenically unsaturated polymerizable group selected from the group of (meth)acrylate ester containing groups;
d) copolymerizing the repeating monomeric units of steps a), b) and optionally c) in an organic solvent, thereby forming a copolymer; and
e) reacting a sultone with the copolymer resulting from step d).

According to yet another aspect, the present disclosure relates to the use of an amphiphilic copolymer or a protective coating composition as described above for protecting a hard surface, in particular for imparting easy-to-clean properties to the hard surface.

### Detailed description

According to a first aspect, the present disclosure relates to an amphiphilic copolymer comprising:
a) repeating monomeric units comprising a pendant zwitterionic moiety;
b) repeating monomeric units comprising a pendant group comprising a fluorine-containing group and at least one heteroatom; and
c) optionally, secondary repeating monomeric units comprising a pendant group comprising a functional group selected from the group consisting of phosphate groups, phosphonate groups, sulfonate groups, alkoxysilane groups, carboxylate groups, and any combinations thereof;
and wherein the repeating monomeric units of the amphiphilic copolymer independently comprise an ethylenically unsaturated polymerizable group selected from the group of (meth)acrylate ester containing groups.

In the context of the present disclosure, it has been surprisingly found that an amphiphilic copolymer as described above provides excellent easy-to-clean and anti-fogging properties when used to treat a surface, in particular a hard surface.

Without wishing to be bound by theory, it is believed that these excellent easy-to-clean and anti-fogging properties are due to the specific combination of oleophobic and hydrophilic properties provided respectively by the pendant groups comprising a fluorine-containing group and the pendant zwitterionic moieties. Still without being bound by theory, it is believed that due to the respective functional groups of the repeating monomer units being present as pendant groups (as opposed to present in the backbone of the copolymer), advantageous surface anchoring is provided with the treated surface, which in turn translates into enhanced oleophobic and hydrophilic properties. In the context of the present disclosure, the term "pendant group" is meant to refer to an offshoot, which is neither oligomeric nor polymeric, from a polymeric chain.

In some aspects, the amphiphilic copolymers as described above are able to provide protective coatings provided with excellent durability, in particular wet mechanical abrasion resistance.

In the context of the present disclosure, the expression "zwitterionic moiety" is meant to designate a moiety comprising both cationic and anionic groups, or corresponding simultaneously ionizable groups.

Unless otherwise stated, the following terms used in the specification and claims have the meanings given below:
The term "alkyl" means a linear or branched, cyclic or acylic, saturated monovalent hydrocarbon. The term "alkylene" means a linear saturated divalent hydrocarbon or a branched saturated divalent hydrocarbon. The term "alkoxy" means an alkyl having a terminal oxygen atom. The term "oxyalkoxy" has essentially the meaning given above for alkoxy except that one or more oxygen atoms may be present in the alkyl chain. The term "oxyalkyl" has essentially the meaning given above for alkyl except that one or more oxygen heteroatoms may be present in the alkyl chain, these heteroatoms being separated from each other by at least one carbon. The term "oxyalkylene" has essentially the meaning given above for alkylene except that one or more oxygen heteroatoms may be present in the alkylene chain, these heteroatoms being separated from each other by at least one carbon. The term "perfluoroalkyl" has essentially the meaning given above for "alkyl" except that all or essentially all of the hydrogen atoms of the alkyl are replaced by fluorine atoms. The term "perfluoroalkylene" has essentially the meaning given above for "alkylene" except that all or essentially all of the hydrogen atoms of the alkylene are replaced by fluorine atoms. The term "perfluorooxyalkyl" has essentially the meaning given above for "oxyalkyl" except that all or essentially all of the hydrogen atoms of the oxyalkyl are replaced by fluorine atoms. The term "perfluorooxyalkylene" has essentially the meaning given above for "oxyalkylene" except that all or essentially all of the hydrogen atoms of the oxyalkylene are replaced by fluorine atoms. The expression "perfluorinated group" means an organic group wherein all or essentially all of the carbon bonded hydrogen atoms are replaced with fluorine atoms.

In the context of the present disclosure, the term "oleophobic" is meant to designate the ability to repel or to not combine with oil or grease. The term "hydrophilic" is meant to designate the ability to have high affinity with water (e.g. the tendency to bind or attract water.

The amphiphilic copolymers of the present disclosure are able to provide protective coating compositions which are outstandingly suitable for reducing oily and soil contamination from the treated surface. As such, the protective coating compositions of the present disclosure are particularly suited for imparting "easy-to-clean" or "easy soil removal" properties to a surface, in particular cleaning or removal with water or aqueous cleaning compositions. Due to the particular combination of hydrophilic and oleophobic surface properties, the protective coating compositions of the present disclosure are suitable for various other applications such as anti-fog, water-oil separation, just to name a few. While non-polar substances are repelled form the surface by the oleophobicity, polar substances such as water can spread on the surface and underneath the non-polar contaminants. Thereby, the substances with different polarity may be separated or non-polar components may be removed easily by rinsing with water.

The protective coating compositions of the present disclosure may find utility as protective coating for various metallic and non-metallic surfaces encountered in a large variety of articles including those present in home or commercial kitchens, in decorative household appliances and lighting, glassware, buildings, in bathrooms, or in automotive vehicles.

The amphiphilic copolymer of the present disclosure comprises, as a first technical feature, repeating monomeric units comprising a pendant zwitterionic moiety. Zwitterionic moieties for use herein are not particularly limited. Any zwitterionic moiety known in the art may be used in the context of the present disclosure. Suitable zwitterionic moieties for use herein will be easily identified by those skilled in the art, in the light of the present description.

In a particular aspect of the present disclosure, the zwitterionic moiety for use herein comprises functional groups selected from the group consisting of sulfonate groups, sulfate groups, phosphonate groups, phosphate groups, carboxylate groups, quaternary ammonium groups, sulfonium groups, phosphonium groups, and any combinations thereof.

In another particular aspect, the zwitterionic moiety for use herein comprises a positively charged group selected from quaternary ammonium groups, sulfonium groups, phosphonium groups; and a negatively charged group selected from sulfonate groups, sulfate groups, phosphonate groups, phosphate groups, carboxylate groups.

According to a preferred aspect of the amphiphilic copolymer of the present disclosure, the zwitterionic moiety comprises a positively charged group selected from quaternary ammonium groups, and a negatively charged group selected from sulfonate groups and phosphate groups.

According to an advantageous aspect, the zwitterionic moiety for use herein comprises a positively charged group selected from quaternary ammonium groups, and a negatively charged group selected from sulfonate groups.

According to another advantageous aspect, the zwitterionic moiety for use herein comprises a positively charged group selected from quaternary ammonium groups, and a negatively charged group selected from phosphate groups.

In a preferred aspect of the present disclosure, the monomeric units comprising a pendant zwitterionic moiety for use herein have the general formula (I):

X-A-Y-B-Z (I)

wherein:
X is an ethylenically unsaturated polymerizable group selected from the group of (meth)acrylate ester containing groups;
A and B are linking groups, which are the same or different moieties, and which are independently selected from the group of alkylene or oxyalkylene groups;
Y and Z are interchangeably the positively charged group or the negatively charged group group of the zwitterionic moieties.

In another preferred aspect of the present disclosure, the monomeric units comprising a pendant zwitterionic moiety for use herein have the general formula (I), wherein:
X is an ethylenically unsaturated polymerizable group selected from the group of (meth)acrylate ester containing groups;
A and B are independently selected from the group of alkylene groups, in particular alkylene groups comprising from 1 to 8 carbon atoms, from 1 to 6 carbon atoms, or even from 1 to 4 carbon atoms;
Y and Z are interchangeably selected from the group consisting of sulfonate groups, sulfate groups, phosphonate groups, phosphate groups, carboxylate groups, quaternary ammonium groups, sulfonium groups, phosphonium groups, and any combinations thereof.

In still another preferred aspect of the present disclosure, the monomeric units comprising a pendant zwitterionic moiety for use herein have the general formula (I), wherein:
X is an ethylenically unsaturated polymerizable group selected from the group of (meth) acrylate ester containing groups;
A and B are independently selected from the group of alkylene groups comprising from 1 to 6 carbon atoms, or even from 1 to 4 carbon atoms;
Y and Z are interchangeably selected from the group consisting of sulfonate groups, phosphonate groups, and quaternary ammonium groups.

According to a more preferred aspect, the monomeric units comprising a pendant zwitterionic moiety for use herein have the general formula (I), wherein:
X is an ethylenically unsaturated polymerizable group selected from the group of (meth)acrylate ester containing groups;
A and B are independently selected from the group of alkylene groups comprising from 1 to 4 carbon atoms;
Y is selected from the group consisting of ammonium groups; and
Z is selected from the group consisting of sulfonate groups.

According to another more preferred aspect, the monomeric units comprising a pendant zwitterionic moiety for use herein have the general formula (I), wherein:
X is an ethylenically unsaturated polymerizable group selected from the group of (meth) acrylate ester containing groups;
A and B are independently selected from the group of alkylene groups comprising from 1 to 4 carbon atoms;
Y is selected from the group consisting of phosphate groups; and
Z is selected from the group consisting of ammonium groups.

According to an even more preferred aspect, the monomeric units comprising a pendant zwitterionic moiety is selected from the group consisting of 2-(N-3-sulfopropyl-N,N-dialkylammonium) ethyl acrylate, 2-(N-3-sulfobutyl-N,N-dialkylammonium) ethyl acrylate and 2-methacryloyloxyethyl phosphorylcholine.

According to a very preferred aspect of the present disclosure, the monomeric units comprising a pendant zwitterionic moiety is selected from the group consisting of 2-(N-3-sulfopropyl-N,N-dimethylammonium) ethyl acrylate and 2-methacryloyloxyethyl phosphorylcholine.

One exemplary monomeric unit comprising a pendant zwitterionic moiety has formula (II) below:

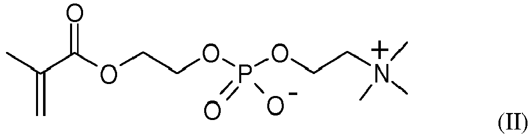

In a particular aspect of the present disclosure, the monomeric units comprising a pendant zwitterionic moiety are free of fluorine-containing groups.

The amphiphilic copolymer of the present disclosure comprises, as a second technical feature, repeating monomeric units comprising a pendant group comprising a fluorine-containing group and at least one heteroatom.

In the context of the present disclosure, it has been surprisingly discovered that the presence of at least one heteroatom in the repeating monomeric units having a pendant group comprising a fluorine-containing group beneficially impact the overall hydrophilic/oleophobic properties of the surfaces treated with coating compositions comprising the amphiphilic copolymers of the present disclosure. Without wishing to be bound by theory, it is believed that the heteroatom(s) present in the repeating monomeric units having a pendant group comprising a fluorine-containing group provide more hydrophilic character to the fluorinated pendant group, yet maintaining oleophobic features. This is counter-intuitive as the skilled person would normally not introduce any hydrophilic character to the fluorinated pendant group which is supposed to solely provide oleophobic properties to the amphiphilic copolymer.

In a particular aspect of the amphiphilic copolymer of the present disclosure, the at least one heteroatom comprised in the repeating monomeric units comprising a pendant group comprising a fluorine-containing group are selected from the group consisting of oxygen, nitrogen, sulfur, phosphorus, and any combinations thereof.

In another particular aspect of the present disclosure, the at least one heteroatom is selected from the group consisting of oxygen, nitrogen, sulfur, and any combinations thereof.

In still another particular aspect of the present disclosure, the at least one heteroatom comprised in the repeating monomeric units comprising a pendant group comprising a fluorine-containing group, is part of a functional group which is preferably a nonionic functional group.

According to an exemplary aspect of the disclosure, the at least one heteroatom comprised in the repeating monomeric units comprising a pendant group comprising a fluorine-containing group, is part of a functional group selected from the group consisting of oxyalkylene groups, -O-, -S-, -SO₂-; primary amines, secondary amines or tertiary amines.

According to a preferred aspect of the disclosure, the at least one heteroatom comprised in the repeating monomeric units comprising a pendant group comprising a fluorine-containing group, is part of a functional group selected from the group consisting of -SO₂-; secondary amines; tertiary amines; and any combinations thereof. More preferably, the at least one heteroatom comprised in the repeating monomeric units comprising a pendant group comprising a fluorine-containing group, is part of a functional group selected from the group consisting of -SO₂- or -NR¹-, wherein R¹ is H or an alkyl group, in particular methyl or ethyl.

Fluorine-containing groups for use herein are not particularly limited. Any fluorine-containing group known in the art may be used in the context of the present disclosure. Suitable fluorine-containing groups for use herein will be easily identified by those skilled in the art, in the light of the present description.

In a particular aspect of the present disclosure, the fluorine-containing group for use herein is selected from the group consisting of fluoroalkyl groups, perfluoroalkyl groups, fluorooxyalkyl groups, perfluorooxyalkyl groups, fluoroalkylene groups, perfluoroalkylene groups, fluorooxyalkylene groups, perfluorooxyalkylene groups, and any combinations thereof.

In an exemplary aspect, the fluorine-containing group for use herein is selected from the group consisting of fluoroalkyl groups, perfluoroalkyl groups, and any combinations thereof.

In another exemplary aspect, the fluorine-containing group for use herein is selected from the group consisting of fluorooxyalkyl groups, perfluorooxyalkyl groups, and any combinations thereof.

In still another exemplary aspect, the fluorine-containing group for use herein is selected from perfluorooxyalkylene oligomeric moieties, in particular perfluorooxypropylene oligomeric moieties, perfluorooxyethylene oligomeric moieties, and any combinations thereof.

According to an advantageous aspect of the amphiphilic copolymer of the present disclosure, the fluorine-containing group for use herein comprises a linear or branched alkyl group comprising no greater than 12 carbon atoms, no greater than 10 carbon atoms, no greater than 8 carbon atoms, no greater than 6 carbon atoms, or even no greater than 5 carbon atoms.

According to another advantageous aspect, the fluorine-containing group for use herein comprises a linear or branched alkyl group comprising from 1 to 12 carbon atoms, from 1 to 10 carbon atoms, from 1 to 8 carbon atoms, from 1 to 6 carbon atoms, or even from 1 to 5 carbon atoms.

According to another advantageous aspect, the fluorine-containing group for use herein comprises a linear or branched alkyl group comprising from 1 to 8 carbon atoms, from 2 to 8 carbon atoms, from 2 to 6 carbon atoms, or even from 2 to 4 carbon atoms.

According to a preferred aspect, the fluorine-containing group is selected from the group of perfluoropropane and perfluorobutane. More preferably, the fluorine-containing group is selected to be perfluorobutane.

In the context of the present disclosure, it has been surprisingly discovered that amphiphilic copolymers comprising repeating monomeric units having a pendant group comprising a fluorine-containing group and at least one heteroatom, wherein the fluorine-containing group comprises a linear or branched alkyl group comprising no greater than 12 carbon atoms, no greater than 10 carbon atoms, no greater than 8 carbon atoms, no greater than 6 carbon atoms, or even no greater than 5 carbon atoms, provide advantageous oleophobic properties to the treated surface whilst fully preserving the hydrophilic properties provided by the repeating monomeric units comprising a pendant zwitterionic moiety. Indeed, using fluorine-containing groups comprising a linear or branched alkyl group comprising more than 12 carbon atoms is more likely to detrimentally affect the hydrophilic properties provided by the repeating monomeric units comprising a pendant zwitterionic moiety due to disadvantageous steric hindrance.

In a preferred aspect of the present disclosure, the monomeric units comprising a pendant group comprising a fluorine-containing group and at least one heteroatom have the general formula (III):

U-C-V-D-Rf (III)

wherein:
U is an ethylenically unsaturated polymerizable group selected from the group of (meth) acrylate ester containing groups;
C and D are linking groups, which are the same or different moieties, and which are independently selected from the group of alkylene groups, oxyalkylene groups, -SO₂-;
V is selected from -O-, -S-, -NR¹- or -CH₂;
R¹ is H or an alkyl group, in particular methyl or ethyl; and
Rf is the fluorine-containing group.

In another preferred aspect of the present disclosure, the monomeric units comprising a pendant group comprising a fluorine-containing group and at least one heteroatom for use herein have the general formula (III), wherein:
U is an ethylenically unsaturated polymerizable group selected from the group of (meth)acrylate ester containing groups;
C is selected from the group of alkylene groups comprising from 1 to 8 carbon atoms, from 1 to 6 carbon atoms, or even from 1 to 4 carbon atoms;
V is selected from -O- or -NR¹-, preferably -NR¹-;
R¹ is preferably methyl or ethyl;
D is -SO₂-; and
Rf is selected from the group of perfluoroalkyl groups, preferably comprising a linear or branched alkyl group comprising from 1 to 8 carbon atoms, from 2 to 8 carbon atoms, from 2 to 6 carbon atoms, or even from 2 to 4 carbon atoms.

According to a very preferred aspect of the present disclosure, the monomeric units comprising a pendant group comprising a fluorine-containing group and at least one heteroatom are selected to be N-methyl-perfluorobutane-1-sulfonamide ethyl acrylate.

In a particular aspect of the present disclosure, the monomeric units comprising a pendant group comprising a fluorine-containing group and at least one heteroatom are free of zwitterionic moieties.

One exemplary monomeric unit comprising a pendant group comprising a fluorine-containing group and at least one heteroatom has formula (IV) below:

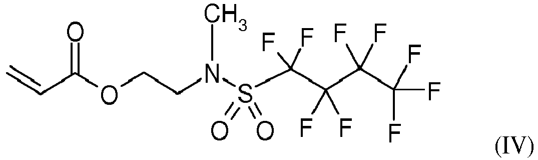

According to a particular execution of the present disclosure, the amphiphilic copolymer may, optionally, comprise secondary repeating monomeric units comprising a pendant group comprising a functional group selected from the group consisting of phosphate groups, phosphonate groups, sulfonate groups, alkoxysilane groups, carboxylate groups, and any combinations thereof.

The presence of these secondary repeating monomeric units in the amphiphilic copolymer has been found to beneficially improve the durability of the resulting protective coating applied onto the treated surface, in particular the wet mechanical abrasion resistance. Without wishing to be bound by theory, it is believed the repeating pendant functional groups selected from the group consisting of phosphate groups, phosphonate groups, sulfonate groups, alkoxysilane groups and carboxylate groups, provide anchoring groups which advantageously improve the surface anchoring with the treated substrate.

In an advantageous aspect of the amphiphilic copolymer, the optional secondary repeating monomeric units comprising pendant groups comprising a functional group selected from the group consisting of phosphate groups and alkoxysilane groups.

Advantageous alkoxysilane groups for use herein include, but are not limited to, those having the formula Si(OR)₃, wherein R is independently hydrogen or an alkyl group having 1 to 4 carbon atoms. Preferably, the alkoxysilane groups for use herein are selected from the group of trimethoxysilyl and triethoxysilyl.

According to one preferred aspect of the present disclosure, the secondary repeating monomeric unit comprising a pendant group comprising a functional group is selected to be 3-(trimethoxysilyl)propylmethacrylate.

According to another preferred aspect of the present disclosure, the secondary repeating monomeric unit comprising a pendant group comprising a functional group is selected to be 2-(methacryloyloxy)ethyl phosphate.

In the context of the present disclosure, it has been found that improved mechanical durability of the coating may be obtained on glass substrates while using secondary repeating monomeric units comprising pendant groups comprising a functional group selected from the group of alkoxysilane groups.

Similarly, but without wishing to be bound by theory, it is believed that improved mechanical durability of the coating may also be obtained on metallic substrates, in particular stainless steel while using secondary repeating monomeric units comprising pendant groups comprising a functional group selected from the group of phosphate groups.

The amphiphilic copolymer of the present disclosure are further characterized in that the repeating monomeric units of the amphiphilic copolymer independently comprise an ethylenically unsaturated polymerizable group selected from the group of (meth)acrylate ester containing groups. In a preferred aspect, the repeating monomeric units of the amphiphilic copolymer independently comprise an ethylenically unsaturated polymerizable group selected from the group of acrylate ester containing groups. In a typical aspect, the ethylenically unsaturated polymerizable groups of the repeating monomeric units are designed to form the backbone of the amphiphilic copolymer upon suitable polymerization reaction.

According to a typical aspect, the amphiphilic copolymer of the present disclosure is non-crosslinked. Advantageously, crosslinking of the amphiphilic copolymer is not required for it to provide the beneficial oleophobic and hydrophilic properties to the treated surface. Accordingly, in an advantageous aspect, the amphiphilic copolymer of the present disclosure is free of any crosslinking monomeric units.

Amphiphilic copolymers described herein may generally be prepared according any conventional method, well known to those skilled in the art. As a way of example, the amphiphilic copolymers may be prepared by reacting a mixture containing the two (optional, three) types of monomers typically in the presence of an initiator and optionally, a chain transfer agent (i.e., catalyst). By the term "reacting" it is meant forming a composition that includes at least one identifiable structural element due to each of the monomeric units. Depending on the stoichiometry of the reaction, an oligomer or polymer may be formed. Typically, the polymer or oligomer has a distribution of molecular weights and compositions.

Polymerization conditions can be readily determined by those skilled in the art in the light of the present description. For example, the polymerization can be carried out at a wide variety of temperatures suitable for conducting an organic free-radical reaction. Temperature and solvent for a particular use can be selected by those skilled in the art based on considerations such as the solubility of reagents, temperature required for the use of a particular initiator, and desired molecular weight. While it is not practical to enumerate a particular temperature suitable for all initiators and all solvents, generally suitable temperatures are in a range of 30°C to 200°C, 30°C to 150°C, or even 50°C to 120°C.

Free-radical polymerizations may be carried out in the presence of chain transfer agents. Typical chain transfer agents that may be used in the preparation of compositions described herein include hydroxyl-substituted mercaptans (e.g., 2-mercaptoethanol, 3-mercapto-2-butanol, 3-mercapto-2-propanol, 3-mercapto-1-propanol, and 3-mercapto-1,2-propanediol (i.e., thioglycerol)); amino-substituted mercaptans (e.g., 2-mercaptoethylamine); difunctional mercaptans (e.g., di(2-mercaptoethyl)sulfide); and aliphatic mercaptans (e.g., octylmercaptan, dodecylmercaptan, and octadecylmercaptan). Others include methylmercaptopropionate and mercaptopropionic acid.

Free-radical polymerizations may be carried out in the presence of initiators (i.e., catalysts). Typical initiators that may be used in the preparation of compositions described herein include radical-generating initiators including peroxide-based initiators. An example includes azobisisobutyronitrile (AIBN) commercially available from Sigma-Aldrich.

In some particular aspects, the reaction is carried out in one or more organic solvents. The components may be present in the reaction medium at any suitable concentration (e.g., from 5 percent to 80 percent by weight based on the total weight of the reaction mixture). Illustrative examples of suitable solvents include ethers (e.g., tetrahydrofuran, diethyl ether, glyme, diglyme, and diisopropyl ether), esters (e.g., ethyl acetate and butyl acetate), alcohols (e.g., ethanol and isopropyl alcohol), ketones (e.g., acetone, methyl ethyl ketone and methyl isobutyl ketone), halogenated solvents (e.g., methylchloroform, 1,1,2-trichloro-1,2,2-trifluoroethane, trichloroethylene, and trifluorotoluene), and mixtures thereof.

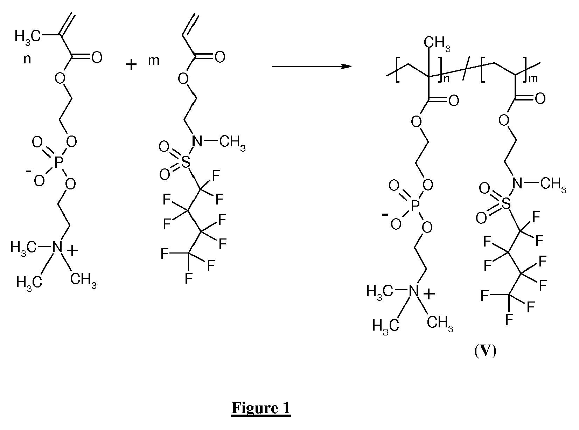

One representative method of manufacturing a copolymer according to the present disclosure is represented in Figure 1, whereby the copolymer has formula (V).

A particular method of manufacturing a copolymer comprising pendant zwitterionic moieties and pendant groups comprising a fluorine-containing group and at least one heteroatom, wherein the zwitterionic moiety comprises a positively charged group selected from quaternary ammonium groups, and a negatively charged group selected from sulfonate groups, is described hereinafter.

In another aspect, the present disclosure is directed to a protective coating composition comprising:
a) an amphiphilic copolymer as described above, and
b) a solvent comprising water.

The protective coating composition of the present disclosure comprises, besides the amphiphilic copolymer as described above, a solvent comprising water. Solvents for use herein are not particularly limited. Any solvent comprising water commonly known in the art may be used in the context of the present disclosure. Suitable water-comprising solvents for use herein will be easily identified by those skilled in the art, in the light of the present description.

Examples of suitable water-comprising solvents for use herein include solvents comprising water and optionally also water-miscible solvents. Examples of suitable water-miscible solvents are primary or secondary mono- or polyalcohols having 1 to 6 carbon atoms, such as e.g. methanol, ethanol, propanol, isopropanol, n-butanol isobutanol, pentanol, hexanol or cyclohexanol. Other suitable water-miscible solvents include watersoluble ethers, such as tetrahydrofuran (THF), dipropyleneglycol monomethylether (DPM) or diethylene glycol dimethylether (Diglyme).

According to one exemplary aspect of the coating composition of the present disclosure, the solvent for use herein comprises a combination of water and an organic solvent, in particular an ether or an alcohol. Examples of suitable alcohols for use herein include, but are not limited to, methanol, ethanol, propanol and isopropanol. Particular examples of suitable water-comprising solvents for use herein include solvent combinations of water and alcohols such as e.g. water/methanol, water/ethanol, water/propanol or water/isopropanol.

In an exemplary aspect of the coating composition, the solvent comprises a combination of water and an organic solvent, and wherein the solvent is selected from the group consisting of ethers, more in particular a cyclic ether. In a particular aspect, the solvent comprises a combination of water and tetrahydrofuran or water and ethanol.

In a typical aspect, the protective coating composition according to the present disclosure comprises an amphiphilic copolymer in an amount of at least 0.01 wt%, at least 0.05 wt%, at least 0.1 wt%, at least 0.3 wt%, at least 0.5 wt%, at least 0.8, or even at least 1wt%, based on the weight of the overall coating composition.

In another typical aspect, the protective coating composition according to the present disclosure comprises an amphiphilic copolymer in an amount of at least 0.8 wt%, at least 1 wt%, at least 1.5 wt%, at least 2 wt%, at least 2.5 wt%, or even at least 3 wt%, based on the weight of the overall coating composition.

According to a preferred aspect of the present disclosure, the protective coating composition comprises an amphiphilic copolymer in an amount of less than 10 wt%, less than 8 wt%, less than 6 wt%, or even less than 5 wt%, based on the weight of the overall coating composition.

According to still another preferred aspect of the present disclosure, the protective coating composition comprises an amphiphilic copolymer in an amount comprised between 0.05 wt% and 10 wt%, between 0.1 wt% and 10 wt%, between 0.1 wt% and 8 wt%, between 0.2 wt% and 6 wt%, between 0.3 wt% and 5 wt%, between 0.5 wt% and 5 wt%, between 0.5 wt% and 4 wt%, or even between 1.0 wt% and 3.0 wt%, based on the weight of the overall coating composition.

The protective coating composition of the present disclosure may further comprise optional additives commonly known in the field. Suitable additives will be typically selected depending on the targeted application. Exemplary additives include, but are not limited to, surface-active compounds, corrosion inhibitors, preservatives, complexing agents, galvanization assistants, coating additives, coloring pigments, chelating agents, detergents, stabilizers, dispersants, enzymes, dyes or perfumes.

The protective coating compositions of the present disclosure may be in the form of a solution, emulsion, suspension, dispersion or aerosol, depending on the targeted application. According to a typical aspect, the coating composition is in the form of an aqueous solution or dispersion of an amphiphilic copolymer as described above.

The protective coating compositions may be designed in any suitable form, depending again on the intended application. In an exemplary aspect, the protective coating composition may be in a sprayable form, or alternatively, in a wipable or dippable form.

The protective coating composition can be applied using any of a variety of liquid coating techniques (e.g., spraying, dipping, painting, etc.). It can be simply dried at room temperature to remove at least a portion of the water or organic solvent that may be included. If desired, the coating composition can be heated, after coating, to a temperature above room temperature (typically between 50°C and 150°C) for improved performance through e.g. curing.

In another aspect, the present disclosure is directed to a method of treating a hard surface comprising the steps of:
a) providing a protective coating composition as described above;
b) applying the protective coating composition to the hard surface thereby forming a layer of the coating composition adjacent to the hard surface; and
c) optionally, drying and/or curing the layer of the coating composition thereby forming a protective coating layer adjacent to the hard surface.

In a typical aspect, the treated hard surface comprises a material selected from the group consisting of metal, wood, wood laminate, polyurethane-coated wood, glass, ceramic, and any combinations thereof. In a preferred aspect, the hard surface comprises a material selected from the group consisting metal and glass, in particular glass.

The protective coating composition of the present disclosure are particularly suitable for imparting easy-to-clean properties to hard surfaces.

According to a particular aspect of the method of treating a hard surface, the drying/curing step, in particular the curing step, is performed at temperatures comprised between 20°C and 35°C, or even between 20°C and 30°C.

In another typical aspect, the drying/curing step, in particular the curing step, is performed at temperatures typically comprised between 60°C and 200°C, between 60°C and 150°C, or even between 80°C and 120°C.

In still another aspect, the present disclosure is directed to a method of manufacturing an amphiphilic copolymer comprising pendant zwitterionic moieties and pendant groups comprising a fluorine-containing group, wherein the zwitterionic moiety comprises a positively charged group selected from quaternary ammonium groups, and a negatively charged group selected from sulfonate groups.

In the context of the present disclosure, it has been found that monomeric units comprising pendant groups comprising a fluorine-containing group and at least one heteroatom, and monomeric units comprising a pendant zwitterionic moiety comprising a positively charged group selected from quaternary ammonium groups and a negatively charged group selected from sulfonate groups, may not be solubilized in a same solvent (even at elevated temperature). This incompatibility issue rendered the manufacturing of the corresponding amphiphilic copolymer particularly challenging. It is besides a recognized synthetic challenge in the art to copolymerize directly monomeric units comprising a zwitterionic moiety and monomeric units comprising a fluorine-containing group, in particular acrylate based monomeric units.

Accordingly, a unique polymer-modification synthetic route (two-step-one-pot) has been developed in the context of the present disclosure for the preparation of the corresponding amphiphilic copolymer having mixed side-chain functionalities.

The method of manufacturing comprises the steps of:
a) providing repeating monomeric units comprising pendant groups comprising a fluorine-containing group and at least one heteroatom;
b) providing repeating monomeric units comprising pendant tertiary amines;
c) optionally, providing secondary repeating monomeric units comprising pendant groups comprising a functional group selected from the group consisting of phosphate groups, phosphonate groups, sulfonate groups, alkoxysilane groups, carboxylate groups, and any combinations thereof; wherein the repeating monomeric units of the amphiphilic copolymer independently comprise an ethylenically unsaturated polymerizable group selected from the group of (meth)acrylate ester containing groups;
d) copolymerizing the repeating monomeric units of steps a), b) and optionally c) in an organic solvent, thereby forming a copolymer; and
e) reacting a sultone with the copolymer resulting from step d).

According to a preferred aspect of the method of manufacturing an amphiphilic copolymer, the sultone is selected from the group consisting of 1,4 butane sultone, 1,3-propane sultone, and any combinations thereof.

According to a particular aspect of the method of manufacturing an amphiphilic copolymer, the step of copolymerizing the repeating monomeric units of steps a) and b) is performed in a monomer molar ratio comprised between 1:2 and 2:1, in particular in a monomer molar ratio of 1:1.

According to another particular aspect of the method of manufacturing an amphiphilic copolymer, the step of copolymerizing the repeating monomeric units of steps a), b) and optionally c), is performed at temperatures typically comprised between 40°C and 100°C, between 50°C and 90°C, or even between 60°C and 80°C.

All particular and preferred aspects relating to the amphiphilic copolymer and the protective coating composition as described above, are fully applicable to the description of the method of treating a hard surface and to the method of manufacturing an amphiphilic copolymer, as described above.

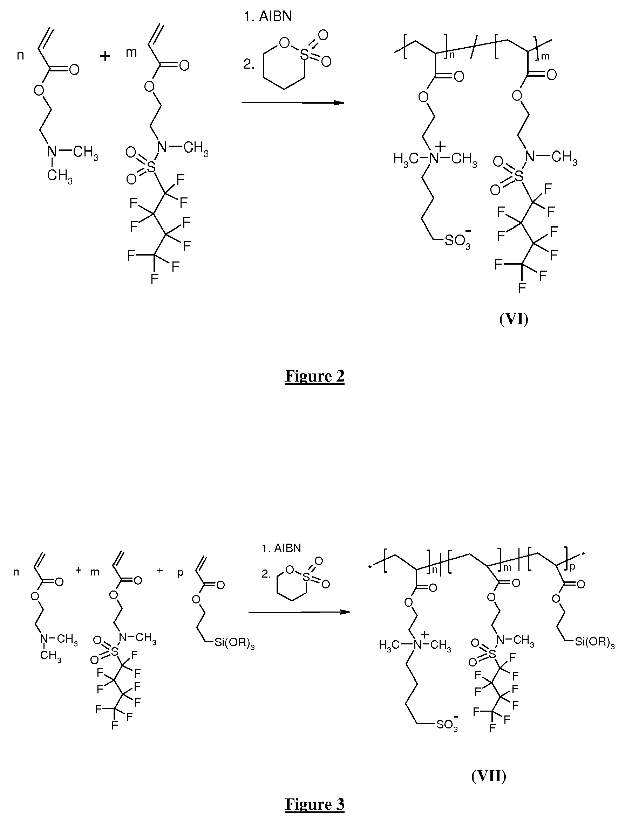

One representative method of manufacturing a copolymer according to the present disclosure is represented in Figure 2, whereby the copolymer has formula (VI).

Another representative method of manufacturing an amphiphilic copolymer comprising secondary repeating monomeric units comprising a pendant group comprising a functional group selected from the group consisting of phosphate groups, phosphonate groups, sulfonate groups, alkoxysilane groups, carboxylate groups, and any combinations thereof, is represented in Figure 3, whereby the copolymer has formula (VII).

According to still another aspect, the present disclosure is directed to a coated article comprising a substrate and a coating layer adjacent to at least part of the surface of the substrate, wherein the coating layer comprises a layer of the protective coating composition, as described above, which has been dried and/or cured onto the surface of the substrate.

According to an advantageous aspect of the coated article of the present disclosure, the substrate is a hard surface comprising typically a material selected from the group consisting of metal, wood, wood laminate, polyurethane-coated wood, glass, ceramic, and any combinations thereof. More advantageously, the hard surface comprises a material selected from the group consisting of metal and glass, in particular glass.

According to an advantageous aspect, the coated article of the present disclosure has a static water contact angle of less than 50°, less than 40°, less than 30°, less than 20°, less than 15°, or even less than 10°, when measured according to the static water contact angle measurement method described in the experimental section.

According to another advantageous aspect, the coated article of the present disclosure has a static water contact angle of less than 50°, less than 40°, less than 30°, less than 20°, less than 15°, or even less than 10°, after 10 wet mechanical abrasion cycles when measured according to the wet abrasion test method described in the experimental section.

According to still another advantageous aspect, the coated article of the present disclosure has a static hexadecane contact angle of more than 40°, more than 45°, more than 50°, more than 55°, more than 60°, or even more than 65°, when measured according to the static hexadecane contact angle measurement method described in the experimental section.

According to yet another advantageous aspect, the coated article of the present disclosure has a static hexadecane contact angle of more than 40°, more than 45°, more than 50°, more than 55°, or even more than 60°, after 10 wet mechanical abrasion cycles when measured according to the wet abrasion test method described in the experimental section.

All particular and preferred aspects relating to the amphiphilic copolymer, the protective coating composition and the methods as described above, are fully applicable to the description of the coated article, as described above.

According to still another aspect, the present disclosure relates to the use of an amphiphilic copolymer or a protective coating composition as described above for protecting a hard surface which typically comprises a material selected from the group consisting of metal and glass, in particular glass.

In yet another aspect, the present disclosure relates to the use of an amphiphilic copolymer or a protective coating composition as described above for imparting easy-to-clean properties to a hard surface, in particular a glass substrate.

All particular and preferred aspects relating to the amphiphilic copolymer, the protective coating composition, the methods and the coated article as described above, are fully applicable to the description of the uses of the present disclosure, as described above.
Item 1 is an amphiphilic copolymer comprising:
   a) repeating monomeric units comprising a pendant zwitterionic moiety;
   b) repeating monomeric units comprising a pendant group comprising a fluorine-containing group and at least one heteroatom; and
   c) optionally, secondary repeating monomeric units comprising a pendant group comprising a functional group selected from the group consisting of phosphate groups, phosphonate groups, sulfonate groups, alkoxysilane groups, carboxylate groups, and any combinations thereof;
   and wherein the repeating monomeric units of the amphiphilic copolymer independently comprise an ethylenically unsaturated polymerizable group selected from the group of (meth)acrylate ester containing groups.
Item 2 is an amphiphilic copolymer according to item 1, wherein the fluorine-containing group is selected from the group consisting of fluoroalkyl groups, perfluoroalkyl groups, fluorooxyalkyl groups, perfluorooxyalkyl groups, fluoroalkylene groups, perfluoroalkylene groups, fluorooxyalkylene groups, perfluorooxyalkylene groups, and any combinations thereof.
Item 3 is an amphiphilic copolymer according to any of item 1 or 2, wherein the fluorine-containing group is selected from the group consisting of fluoroalkyl groups, perfluoroalkyl groups, and any combinations thereof.
Item 4 is an amphiphilic copolymer according to any of item 1 or 2, wherein the fluorine-containing group is selected from the group consisting of fluorooxyalkyl groups, perfluorooxyalkyl groups, and any combinations thereof.
Item 5 is an amphiphilic copolymer according to item 4, wherein the fluorine-containing group is selected from perfluorooxyalkylene oligomeric moieties, in particular perfluorooxypropylene oligomeric moieties.
Item 6 is an amphiphilic copolymer according to any of the preceding items, wherein the fluorine-containing group comprises a linear or branched alkyl group comprising no greater than 12 carbon atoms, no greater than 10 carbon atoms, no greater than 8 carbon atoms, no greater than 6 carbon atoms, or even no greater than 5 carbon atoms.
Item 7 is an amphiphilic copolymer according to any of the preceding items, wherein the fluorine-containing group comprises a linear or branched alkyl group comprising from 1 to 12 carbon atoms, from 1 to 10 carbon atoms, from 1 to 8 carbon atoms, from 1 to 6 carbon atoms, or even from 1 to 5 carbon atoms.
Item 8 is an amphiphilic copolymer according to any of the preceding items, wherein the fluorine-containing group comprises a linear or branched alkyl group comprising from 1 to 8 carbon atoms, from 2 to 8 carbon atoms, from 2 to 6 carbon atoms, or even from 2 to 4 carbon atoms.
Item 9 is an amphiphilic copolymer according to any of the preceding items, wherein the fluorine-containing group is selected from the group of perfluoropropane and perfluorobutane, preferably perfluorobutane.
Item 10 is an amphiphilic copolymer according to any of the preceding items, wherein the at least one heteroatom comprised in the repeating monomeric units comprising a pendant group comprising a fluorine-containing group, is selected from the group consisting of oxygen, nitrogen, sulfur, phosphorus, and any combinations thereof.
Item 11 is an amphiphilic copolymer according to item 10, wherein the at least one heteroatom is selected from the group consisting of oxygen, nitrogen, sulfur, and any combinations thereof.
Item 12 is an amphiphilic copolymer according to any of the preceding items, wherein the at least one heteroatom comprised in the repeating monomeric units comprising a pendant group comprising a fluorine-containing group, is part of a functional group which is preferably a nonionic functional group.
Item 13 is an amphiphilic copolymer according to any of the preceding items, wherein the at least one heteroatom comprised in the repeating monomeric units comprising a pendant group comprising a fluorine-containing group, is part of a functional group selected from the group consisting of oxyalkylene groups, -O-, -S-, -SO₂-; primary amines, secondary amines or tertiary amines.
Item 14 is an amphiphilic copolymer according to any of the preceding items, wherein the at least one heteroatom comprised in the repeating monomeric units comprising a pendant group comprising a fluorine-containing group, is part of a functional group selected from the group consisting of -SO₂-; secondary amines; tertiary amines; and any combinations thereof.
Item 15 is an amphiphilic copolymer according to any of the preceding items, wherein the at least one heteroatom comprised in the repeating monomeric units comprising a pendant group comprising a fluorine-containing group, is part of a functional group selected from the group consisting of -SO₂- or -NR¹-, wherein R¹ is H or an alkyl group, in particular methyl or ethyl.
Item 16 is an amphiphilic copolymer according to any of the preceding items, wherein the zwitterionic moiety comprises functional groups selected from the group consisting of sulfonate groups, sulfate groups, phosphonate groups, phosphate groups, carboxylate groups, quaternary ammonium groups, sulfonium groups, phosphonium groups, and any combinations thereof.
Item 17 is an amphiphilic copolymer according to any of the preceding items, wherein the zwitterionic moiety comprises a positively charged group selected from quaternary ammonium groups, sulfonium groups, phosphonium groups; and a negatively charged group selected from sulfonate groups, sulfate groups, phosphonate groups, phosphate groups, carboxylate groups.
Item 18 is an amphiphilic copolymer according to any of the preceding items, wherein the zwitterionic moiety comprises a positively charged group selected from quaternary ammonium groups, and a negatively charged group selected from sulfonate groups and phosphate groups.
Item 19 is an amphiphilic copolymer according to any of the preceding items, wherein the zwitterionic moiety comprises a positively charged group selected from quaternary ammonium groups, and a negatively charged group selected from sulfonate groups.
Item 20 is an amphiphilic copolymer according to any of items 1 to 18, wherein the zwitterionic moiety comprises a positively charged group selected from quaternary ammonium groups, and a negatively charged group selected from phosphate groups.
Item 21 is an amphiphilic copolymer according to any of the preceding items, wherein the monomeric units comprising a pendant zwitterionic moiety have the general formula (I):

   X-A-Y-B-Z (I)

   wherein:
   X is an ethylenically unsaturated polymerizable group selected from the group of (meth)acrylate ester containing groups;
   A and B are linking groups, which are the same or different moieties, and which are independently selected from the group of alkylene or oxyalkylene groups;
   Y and Z are interchangeably the positively charged group or the negatively charged group of the zwitterionic moieties.
Item 22 is an amphiphilic copolymer according to item 21, wherein:
   X is an ethylenically unsaturated polymerizable group selected from the group of (meth)acrylate ester containing groups;
   A and B are independently selected from the group of alkylene groups, in particular alkylene groups comprising from 1 to 8 carbon atoms, from 1 to 6 carbon atoms, or even from 1 to 4 carbon atoms;
   Y and Z are interchangeably selected from the group consisting of sulfonate groups, sulfate groups, phosphonate groups, phosphate groups, carboxylate groups, quaternary ammonium groups, sulfonium groups, phosphonium groups, and any combinations thereof.
Item 23 is an amphiphilic copolymer according to item 21, wherein:
   X is an ethylenically unsaturated polymerizable group selected from the group of (meth) acrylate ester containing groups;
   A and B are independently selected from the group of alkylene groups comprising from 1 to 6 carbon atoms, or even from 1 to 4 carbon atoms;
   Y and Z are interchangeably selected from the group consisting of sulfonate groups, phosphonate groups, and quaternary ammonium groups.
Item 24 is an amphiphilic copolymer according to item 21, wherein:
   X is an ethylenically unsaturated polymerizable group selected from the group of (meth)acrylate ester containing groups;
   A and B are independently selected from the group of alkylene groups comprising from 1 to 4 carbon atoms;
   Y is selected from the group consisting of ammonium groups; and
   Z is selected from the group consisting of sulfonate groups.
Item 25 is an amphiphilic copolymer according to item 21, wherein:
   X is an ethylenically unsaturated polymerizable group selected from the group of (meth) acrylate ester containing groups;
   A and B are independently selected from the group of alkylene groups comprising from 1 to 4 carbon atoms;
   Y is selected from the group consisting of phosphate groups; and
   Z is selected from the group consisting of ammonium groups.
Item 26 is an amphiphilic copolymer according to any of the preceding items, wherein the monomeric units comprising a pendant zwitterionic moiety are selected from the group consisting of 2-(N-3-sulfopropyl-N,N-dialkylammonium) ethyl acrylate, 2-(N-3-sulfobutyl-N,N-dialkylammonium) ethyl acrylate and 2-methacryloyloxyethyl phosphorylcholine.
Item 27 is an amphiphilic copolymer according to any of the preceding items, wherein the monomeric units comprising a pendant zwitterionic moiety are selected from the group consisting of 2-(N-3-sulfopropyl-N,N-dimethylammonium) ethyl acrylate and 2-methacryloyloxyethyl phosphorylcholine.
Item 28 is an amphiphilic copolymer according to any of the preceding items, wherein the monomeric units comprising a pendant zwitterionic moiety are free of fluorine-containing groups.
Item 29 is an amphiphilic copolymer according to any of the preceding items, wherein the monomeric units comprising a pendant group comprising a fluorine-containing group and at least one heteroatom have the general formula (III):

   U-C-V-D-Rf (III)

   wherein:
   U is an ethylenically unsaturated polymerizable group selected from the group of (meth) acrylate ester containing groups;
   C and D are linking groups, which are the same or different moieties, and which are independently selected from the group of alkylene groups, oxyalkylene groups, -SO₂-;
   V is selected from -O-, -S-, -NR¹- or -CH₂;
   R¹ is H or an alkyl group, in particular methyl or ethyl; and
   Rf is the fluorine-containing group.
Item 30 is an amphiphilic copolymer according to item 29, wherein:
   U is an ethylenically unsaturated polymerizable group selected from the group of (meth)acrylate ester containing groups;
   C is selected from the group of alkylene groups comprising from 1 to 8 carbon atoms, from 1 to 6 carbon atoms, or even from 1 to 4 carbon atoms;
   V is selected from -O- or -NR¹-, preferably -NR¹-;
   R¹ is preferably methyl or ethyl;
   D is -SO₂-; and
   Rf is selected from the group of perfluoroalkyl groups, preferably comprising a linear or branched alkyl group comprising from 1 to 8 carbon atoms, from 2 to 8 carbon atoms, from 2 to 6 carbon atoms, or even from 2 to 4 carbon atoms.
Item 31 is an amphiphilic copolymer according to any of the preceding items, wherein the monomeric units comprising a pendant group comprising a fluorine-containing group are selected to be N-methyl-perfluorobutane-1-sulfonamide ethyl acrylate.
Item 32 is an amphiphilic copolymer according to any of the preceding items, wherein the monomeric units comprising a pendant group comprising a fluorine-containing group and at least one heteroatom are free of zwitterionic moieties.
Item 33 is an amphiphilic copolymer according to any of the preceding items which is non-crosslinked.
Item 34 is an amphiphilic copolymer according to any of the preceding items, which is free of any crosslinking monomeric units.
Item 35 is an amphiphilic copolymer according to any of the preceding items, which comprises secondary repeating monomeric units comprising pendant groups comprising a functional group selected from the group consisting of phosphate groups, alkoxysilane groups, and any combinations thereof.
Item 36 is a protective coating composition comprising:
   a) an amphiphilic copolymer according to any of items 1 to 35, and
   b) a solvent comprising water.
Item 37 is a protective coating composition according to item 36, which comprises any of an aqueous solution or dispersion of an amphiphilic copolymer according to any of items 1 to 35.
Item 38 is a protective coating composition according to any of item 36 or 37, wherein the solvent comprises a combination of water and an organic solvent, and wherein the solvent is selected from the group consisting of ethers and alcohols, more in particular a cyclic ether.
Item 39 is a protective coating composition according to any of items 36 to 38, wherein the solvent comprises a combination of water and tetrahydrofuran or water and ethanol.
Item 40 is a protective coating composition according to any of items 36 to 39, which comprises an amphiphilic copolymer in an amount of at least 0.01 wt%, at least 0.05 wt%, at least 0.1 wt%, at least 0.3 wt%, at least 0.5 wt%, at least 0.8, or even at least 1wt%, based on the weight of the overall coating composition.
Item 41 is a protective coating composition according to any of items 36 to 40, which comprises an amphiphilic copolymer in an amount of at least 0.8 wt%, at least 1 wt%, at least 1.5 wt%, at least 2 wt%, at least 2.5 wt%, or even at least 3 wt%, based on the weight of the overall coating composition.
Item 42 is a protective coating composition according to any of items 36 to 41, which comprises an amphiphilic copolymer in an amount of less than 10 wt%, less than 8 wt%, less than 6 wt%, or even less than 5 wt%, based on the weight of the overall coating composition.
Item 43 is a protective coating composition according to any of items 36 to 42, which comprises an amphiphilic copolymer in an amount comprised between 0.05 wt% and 10 wt%, between 0.1 wt% and 10 wt%, between 0.1 wt% and 8 wt%, between 0.2 wt% and 6 wt%, between 0.3 wt% and 5 wt%, between 0.5 wt% and 5 wt%, between 0.5 wt% and 4 wt%or even between 1.0 wt% and 3.0 wt%, based on the weight of the overall coating composition.
Item 44 is a method of treating a hard surface comprising the steps of:
   a) providing a protective coating composition according to any of items 36 to 43;
   b) applying the protective coating composition to the hard surface thereby forming a layer of the coating composition adjacent to the hard surface; and
   c) optionally, drying and/or curing the layer of the coating composition thereby forming a protective coating layer adjacent to the hard surface.
Item 45 is a method according to item 44, wherein the hard surface comprises a material selected from the group consisting of metal, wood, wood laminate, polyurethane-coated wood, glass, ceramic, and any combinations thereof.
Item 46 is a method according to any of item 44 or 45, wherein the hard surface comprises a material selected from the group consisting metal and glass, in particular glass.
Item 47 is a method according to any of items 44 to 46, for imparting easy-to-clean properties to the hard surface.
Item 48 is a method according to any of items 44 to 47, wherein the drying/curing step, in particular the curing step, is performed at temperatures comprised between 20°C and 35°C, or even between 20°C and 30°C.
Item 49 is a method according to any of items 44 to 48, wherein the drying/curing step, in particular the curing step, is performed at temperatures typically comprised between 60°C and 200°C, between 60°C and 150°C, or even between 80°C and 120°C.
Item 50 is a method of manufacturing an amphiphilic copolymer comprising pendant zwitterionic moieties and pendant groups comprising a fluorine-containing group, wherein the zwitterionic moiety comprises a positively charged group selected from quaternary ammonium groups, and a negatively charged group selected from sulfonate groups, and wherein the method comprises the steps of:
   a) providing repeating monomeric units comprising pendant groups comprising a fluorine-containing group and at least one heteroatom;
   b) providing repeating monomeric units comprising pendant tertiary amines;
   c) optionally, providing secondary repeating monomeric units comprising pendant groups comprising a functional group selected from the group consisting of phosphate groups, phosphonate groups, sulfonate groups, alkoxysilane groups, carboxylate groups, and any combinations thereof; wherein the repeating monomeric units of the amphiphilic copolymer independently comprise an ethylenically unsaturated polymerizable group selected from the group of (meth)acrylate ester containing groups;
   d) copolymerizing the repeating monomeric units of steps a), b) and optionally c) in a solvent comprising a combination of water and an organic solvent, thereby forming a copolymer; and
   e) reacting a sultone with the copolymer resulting from step d).
Item 51 is a method according to item 50, wherein the sultone is selected from the group consisting of 1,4 butane sultone, 1,3-propane sultone, and any combinations thereof.
Item 52 is a method according to item 50 or 51, wherein the sultone is selected to be 1,4 butane sultone.
Item 53 is a method according to any of items 50 to 52, wherein the step of copolymerizing the repeating monomeric units of steps a) and b) is performed in a monomer molar ratio comprised between 1:2 and 2:1, in particular in a monomer molar ratio of 1:1.
Item 54 is a method according to any of items 50 to 53, wherein the step of copolymerizing the repeating monomeric units of steps a), b) and optionally c), is performed at temperatures typically comprised between 40°C and 100°C, between 50°C and 90°C, or even between 60°C and 80°C.
Item 55 is a coated article comprising a substrate and a coating layer adjacent to at least part of the surface of the substrate, wherein the coating layer comprises a layer of the protective coating composition according to any of items 36 to 43 which has been dried and/or cured onto the surface of the substrate.
Item 56 is a coated article according to item 55, wherein the substrate is a hard surface comprising typically a material selected from the group consisting of metal, wood, wood laminate, polyurethane-coated wood, glass, ceramic, and any combinations thereof.
Item 57 is a coated article according to any of item 55 or 56, wherein the hard surface comprises a material selected from the group consisting of metal and glass, in particular glass.
Item 58 is a coated article according to any of items 55 to 57, which has a static water contact angle of less than 50°, less than 40°, less than 30°, less than 20°, less than 15°, or even less than 10°, when measured according to the static water contact angle measurement method described in the experimental section.
Item 59 is a coated article according to any of items 55 to 58, which has a static water contact angle of less than 50°, less than 40°, less than 30°, less than 20°, less than 15°, or even less than 10°, after 10 wet mechanical abrasion cycles when measured according to the wet abrasion test method described in the experimental section.
Item 60 is a coated article according to any of items 55 to 59, which has a static hexadecane contact angle of more than 40°, more than 45°, more than 50°, more than 55°, more than 60°, or even more than 65°, when measured according to the static hexadecane contact angle measurement method described in the experimental section.
Item 61 is a coated article according to any of items 55 to 60 which has a static hexadecane contact angle of more than 40°, more than 45°, more than 50°, more than 55°, or even more than 60°, after 10 wet mechanical abrasion cycles when measured according to the wet abrasion test method described in the experimental section.
Item 62 is the use of an amphiphilic copolymer according to any of items 1 to 35 or a protective coating composition according to any of items 36 to 43 for protecting a hard surface which typically comprises a material selected from the group consisting of metal and glass, in particular glass.
Item 63 is the use according to item 62, for imparting easy-to-clean properties to the hard surface.

### EXAMPLES

The present disclosure is further illustrated by the following examples. These examples are merely for illustrative purposes only and are not meant to be limiting on the scope of the appended claims.

### Test methods and procedures:

### Contact Angle Measurement

Static contact angle measurements are performed using Millipore water (WCA) or hexadecane (HCA, analytical grade) with a Krüss DSA100 contact angle analyzer. Contact angle is measured on sessile drop (3 µL) and is measured 30 sec after deposition. The values reported are the average of at least 3 (HCA) or 4 (WCA) separate measurements.

### Mechanical wet abrasion testing (Durability testing)

Abrasion tests are performed on a 5900 Reciprocating Abraser (available from Taber Industries) by employing a 5N force and a velocity of 60 cycles/minutes (500 g weight). The cloth used for the abrasion cycles is a 13.5 crockmeter cloth (crockmeter squares, 100% cotton) wetted with deionized water.

### Anti-Fog Test

450 mL of water is added into a 500 mL conical flask and heated to 60 °C. The testing plate is exposed 10 cm above the water on the opening of the flask. Then, the time until fogging of the sample is observed by visual inspection using the following criteria: "Good" (the time until fogging up is more than 60 seconds), "Fair" (the time until fogging up is between 30 and 60 seconds), "Poor" (the time until fogging up is less than 30 seconds).

### Materials employed:

In the examples, the following raw materials are used:
   **1,4-butane sultone (BS)** is commercially available from Sigma-Aldrich.
   **N**,**N**-**Dimethylaminoethyl acrylate (DAA)** is commercially available from Sigma-Aldrich.
   **N-methyl-perfluorobutane-1-sulfonamide ethyl acrylate (MPS)** is obtained from 3M Belgium (Zwijndrecht).
   **Azobisisobutyronitrile (AIBN)** is commercially available from Fluka. **2**-**metharyloyloxyethyl phosporylcholine (2MP)** is commercially available from Sigma-Aldrich.
   **3-(Trimethoxysilyl)propyl methacrylate (TPM)** is commercially available from Sigma-Aldrich.

### Synthesis of the (co)polymers:

*Poly(SDE).* 1g (0.007 mol) of DAA is dissolved in 9g of THF. After purging the solution with nitrogen, 0.010g of AIBN is added and the reaction mixture is stirred at 80°C for 3 hours under nitrogen atmosphere. After the addition of 0.9g (0.007 mol) of 1,4-butane sultone, the mixture is stirred for 2 hours at 80°C, allowed to cool to room temperature and stirred overnight, before the solvent is removed under vacuum.

*Poly(MPS).* 1.89g (0.005 mol) of MPS is dissolved in 8.1 g of THF. After purging the solution with nitrogen, 0.015g of AIBN are added and the reaction mixture is stirred at 70°C for 2 hours under nitrogen atmosphere. The solution is allowed to stir overnight at room temperature, before the solvent is removed under vacuum.

*Poly(SDE-co-MPS).* 0.72 g (0.005 mol) of DAA and 1.89g of (0.005 mol) MPS are dissolved in 7.7 g of THF, the solution is purged with nitrogen for 5 min and 0.03g of AIBN is added. The mixture is heated to 70°C and stirred at this temperature for 2 hours. 0.7g (0.005 mol) of 1,4-butane sultone are added and the mixture is allowed to stir for another 3 hours at 70°C and at room temperature overnight. The residual solvent is removed under vacuum.

*Poly(SDE-co-MPS). 0.72* g (0.005 mol) of DAA and 1.89g of (0.005 mol) MPS are dissolved in 7.7 g of THF. The solution is purged with nitrogen for 5 min and 0.03g of AIBN were added. The mixture is heated to 70°C and stirred at this temperature for 2 hours, allowed to cool to room temperature and stirred overnight. The residual solvent is removed under vacuum.

*Poly(SDE-co-MPS-co-TPM).* 0.72 g (0.005 mol) of DAA, 1.89g of (0.005 mol) MPS and 0.25 g (0.001 mol) of TPM are dissolved in 7.7 g of THF. The solution is purged with nitrogen for 5 min and 0.03g of AIBN are added. The mixture is heated to 70°C and stirred at this temperature for 2 hours. 0.7g (0.005 mol) of 1,4-butane sultone are added and the mixture is allowed to stir for another 3 hours at 70°C and at room temperature overnight. The residual solvent is removed under vacuum.

*Poly(2MP).* In a 100mL 3-necked flask, 0.5 g (1.7 mmol) of 2MP are dissolved in a 1:1 mixture of THF and Methanol. 0.05g (0.06 mmol) of AIBN is added and oxygen is removed by purging the solution for 5 min with N₂. Afterwards, the apparatus is closed under N₂ atmosphere and refluxed for 3h at 90°C. After cooling to room temperature, the solution is allowed to stir overnight at room temperature before the solvent is removed in vacuum.

*Poly(2MP-co-MPS).* In a 100mL 3-necked flask, 0.68 g (1.7 mmol) of MPS are dissolved in 12 g of THF. 0.5g of 2MP are dissolved in 12g of MeOH and added dropwise to the solution. 0.05g (0.06 mmol) of AIBN are added and oxygen is removed by purging the solution for 5 min with N₂. Afterwards, the apparatus is closed under N₂ atmosphere and refluxed for 3h at 90°C. After cooling to room temperature, the solution is allowed to stir over night at room temperature before the solvent is removed in vacuum.

### Preparation of the coating compositions and coating procedure

Unless otherwise stated, the coating compositions are simply prepared by adding the appropriate amount of polymer into a THF/water mixture and dissolved by stirring for at least 10 minutes at 20°C using a magnetic stirring bar, so as to achieve the suitable concentration (0.5 wt%, 1 wt% or 2wt%). Typical formulations are prepared with a total weight of 10g (polymer + solvent). One drop of the corresponding solution is put onto the glass substrate (10x10cm, obtained by Rocholl GmbH, Germany) and distributed with a paper towel (KimWipe available from Kimberly Clark) by wiping. For curing at 25°C, the sample is allowed to dry on air for at least 2 hours, while for curing at 100°C, the sample is immediately placed in an oven after coating for 10 sec.

### Examples:

### Examples 1 to 4 and comparative examples C1 to C4: Oleophobic and hydrophilic properties.

Examples 1 to 3 use protective coating compositions comprising amphiphilic copolymers according to the disclosure. Example 4 is making use of a coating composition comprising an amphiphilic copolymer having secondary repeating monomeric units. Examples C1 to C4 are comparative examples. The coating formulations used in the experiments are applied on a glass plate. The data presented in Table 1 reflect the oleophobic and hydrophilic properties of the various coating compositions.

**Table 1:**

| Example | Polymer | Copolymer concentration (wt%) | Curing | Water contact angle [°] | Hexadecane contact angle [°] |
|---|---|---|---|---|---|
| 1 | *Poly(SDE-co-MPS)* | 3 | 25°C | <5 | 68 |
| 2 | *Poly(SDE-co-MPS)* | 1 | 100°C | 7 | 65 |
| 3 | *Poly(2MP-co-MPS)* | 0.5 (in ethanol) | 100°C | 5 | 55 |
| 4 | *Poly(SDE-co-MPS-co-TPM)* | 3 | 25°C | 8 | 68 |
| C1 | *Poly(DAA-co-MPS)* | 3 | 100°C | 66 | 66 |
| C2 | *Poly(MPS)* | 2.5 | 25°C | 36 | 68 |
| C3 | *Poly(SDE)* | 2.5 | 25°C | <5 | <5 |
| C4 | *Poly(2MP)* | 0.5 (in ethanol) | 100°C | <5 | 13 |

As shown in Table 1, protective coating compositions according to the present disclosure combine both excellent oleophobic properties (HCA > 50°) and excellent hydrophilic properties (WCA < 10°). In contrast, coating compositions not according to the disclosure are deficient in either hydrophilic or oleophobic properties.

### Example 5: Mechanical abrasion resistance

**Table 2:**

| Composition | Polymer | Wet mechanical abrasion | Hexadecane contact angle [°] | Water contact angle [°](*) |
|---|---|---|---|---|
| Example 1 | *Poly(SDE-co-MPS)* | 5N, 10x, 60 c/min | 26 | 22 |
| Example 4 | *Poly(SDE-co-MPS-co-TPM)* | | 64 | 10 |

| | | | | |
|---|---|---|---|---|
| (*) measured after wet mechanical abrasion followed by one rinsing step of the coating with deionized water. | | | | |

As shown in Table 2, protective coating compositions according to the present disclosure comprising an amphiphilic copolymer comprising secondary repeating monomeric units comprising a pendant group comprising a functional group selected from the group of alkoxysilane groups (Example 4) have improved durability of the resulting protective coating applied onto the treated surface, in particular the wet mechanical abrasion resistance, when compared to a protective coating composition comprising an amphiphilic copolymer not comprising secondary repeating monomeric units comprising a pendant group comprising a functional group selected from the group of alkoxysilane groups (Example 1).

### Example 6: Anti-fog properties

In this testing, uncoated glass panels and glass panels coated with a coating composition with a 3wt% solution of *Poly(SDE-co-MPS)* amphiphilic copolymer in a THF/H20 (2:1) mixture are used and tested according to the test procedure described above.

The time until fogging of the sample is observed by visual inspection using the following criteria: "Good" (the time until fogging up is more than 60 seconds), "Fair" (the time until fogging up is between 30 and 60 seconds), "Poor" (the time until fogging up is less than 30 seconds).

**Table 3:**

| Composition | Polymer | Anti-Fog Properties |
|---|---|---|
| Example 1 | *Poly(SDE-co-MPS)* | good |
| C5 | None, control | poor |

As reflected in Table 3, the uncoated glass panel gives a "Poor" assessment, meaning that even after a period of 60 seconds after exposing the sample to steam, fogging is still visually observed. In contrast, glass panels coated with a coating composition according to the present disclosure gives a "Good" rating, meaning after a period of 30 seconds after exposing the sample to steam, only slight fogging is still visually observed.

## Claims

1. An amphiphilic copolymer comprising:
a) repeating monomeric units comprising a pendant zwitterionic moiety;
b) repeating monomeric units comprising a pendant group comprising a fluorine-containing group and at least one heteroatom; and
c) optionally, secondary repeating monomeric units comprising a pendant group comprising a functional group selected from the group consisting of phosphate groups, phosphonate groups, sulfonate groups, alkoxysilane groups, carboxylate groups, and any combinations thereof;
and wherein the repeating monomeric units of the amphiphilic copolymer independently comprise an ethylenically unsaturated polymerizable group selected from the group of (meth)acrylate ester containing groups.

2. An amphiphilic copolymer according to claim 1, wherein the fluorine-containing group is selected from the group consisting of fluoroalkyl groups, perfluoroalkyl groups, fluorooxyalkyl groups, perfluorooxyalkyl groups, fluoroalkylene groups, perfluoroalkylene groups, fluorooxyalkylene groups, perfluorooxyalkylene groups, and any combinations thereof.

3. An amphiphilic copolymer according to claim 1 or 2, wherein the fluorine-containing group comprises a linear or branched alkyl group comprising from 1 to 12 carbon atoms, from 1 to 10 carbon atoms, from 1 to 8 carbon atoms, from 1 to 6 carbon atoms, or even from 1 to 5 carbon atoms.

4. An amphiphilic copolymer according to any of the preceding claims, wherein the at least one heteroatom comprised in the repeating monomeric units comprising a pendant group comprising a fluorine-containing group, is selected from the group consisting of oxygen, nitrogen, sulfur, phosphorus, and any combinations thereof.

5. An amphiphilic copolymer according to any of the preceding claims, wherein the zwitterionic moiety comprises functional groups selected from the group consisting of sulfonate groups, sulfate groups, phosphonate groups, phosphate groups, carboxylate groups, quaternary ammonium groups, sulfonium groups, phosphonium groups, and any combinations thereof.

6. An amphiphilic copolymer according to any of the preceding claims, wherein the monomeric units comprising a pendant zwitterionic moiety have the general formula (I):
X-A-Y-B-Z (I)
wherein:
X is an ethylenically unsaturated polymerizable group selected from the group of (meth)acrylate ester containing groups;
A and B are linking groups, which are the same or different moieties, and which are independently selected from the group of alkylene or oxyalkylene groups;
Y and Z are interchangeably the positively charged group or the negatively charged group of the zwitterionic moieties.

7. An amphiphilic copolymer according to claim 6, wherein:
X is an ethylenically unsaturated polymerizable group selected from the group of (meth)acrylate ester containing groups;
A and B are independently selected from the group of alkylene groups, in particular alkylene groups comprising from 1 to 8 carbon atoms, from 1 to 6 carbon atoms, or even from 1 to 4 carbon atoms;
Y and Z are interchangeably selected from the group consisting of sulfonate groups, sulfate groups, phosphonate groups, phosphate groups, carboxylate groups, quaternary ammonium groups, sulfonium groups, phosphonium groups, and any combinations thereof.

8. An amphiphilic copolymer according to claim 6 or 7, wherein:
X is an ethylenically unsaturated polymerizable group selected from the group of (meth) acrylate ester containing groups;
A and B are independently selected from the group of alkylene groups comprising from 1 to 6 carbon atoms, or even from 1 to 4 carbon atoms;
Y and Z are interchangeably selected from the group consisting of sulfonate groups, phosphonate groups, and quaternary ammonium groups.

9. An amphiphilic copolymer according to any of the preceding claims, wherein the monomeric units comprising a pendant group comprising a fluorine-containing group have the general formula (III):
U-C-V-D-Rf (III)
wherein:
U is an ethylenically unsaturated polymerizable group selected from the group of (meth) acrylate ester containing groups;
C and D are linking groups, which are the same or different moieties, and which are independently selected from the group of alkylene groups, oxyalkylene groups, -SO₂-;
V is selected from -O-, -S-, -NR¹- or -CH₂;
R¹ is H or an alkyl group, in particular methyl or ethyl; and
Rf is the fluorine-containing group.

10. An amphiphilic copolymer according to claim 9, wherein:
U is an ethylenically unsaturated polymerizable group selected from the group of (meth)acrylate ester containing groups;
C is selected from the group of alkylene groups comprising from 1 to 8 carbon atoms, from 1 to 6 carbon atoms, or even from 1 to 4 carbon atoms;
V is selected from -O- or -NR¹-, preferably -NR¹-;
R¹ is preferably methyl or ethyl;
D is -SO₂-; and
Rf is selected from the group of perfluoroalkyl groups, preferably comprising a linear or branched alkyl group comprising from 1 to 8 carbon atoms, from 2 to 8 carbon atoms, from 2 to 6 carbon atoms, or even from 2 to 4 carbon atoms.

11. An amphiphilic copolymer according to any of the preceding claims which is non-crosslinked.

12. A protective coating composition comprising:
a) an amphiphilic copolymer according to any of claims 1 to 11, and
b) a solvent comprising water.

13. A protective coating composition according to claim 12, which comprises an amphiphilic copolymer in an amount comprised between 0.05 wt% and 10 wt%, between 0.1 wt% and 10 wt%, between 0.1 wt% and 8 wt%, between 0.2 wt% and 6 wt%, between 0.3 wt% and 5 wt%, between 0.5 wt% and 5 wt%, between 0.5 wt% and 4 wt%, or even between 1.0 wt% and 3.0 wt%, based on the weight of the overall coating composition.

14. A method of manufacturing an amphiphilic copolymer comprising pendant zwitterionic moieties and pendant groups comprising a fluorine-containing group, wherein the zwitterionic moiety comprises a positively charged group selected from quaternary ammonium groups, and a negatively charged group selected from sulfonate groups, and wherein the method comprises the steps of:
a) providing repeating monomeric units comprising pendant groups comprising a fluorine-containing group and at least one heteroatom;
b) providing repeating monomeric units comprising pendant tertiary amines;
c) optionally, providing secondary repeating monomeric units comprising pendant groups comprising a functional group selected from the group consisting of phosphate groups, phosphonate groups, sulfonate groups, alkoxysilane groups, carboxylate groups, and any combinations thereof; wherein the repeating monomeric units of the amphiphilic copolymer independently comprise an ethylenically unsaturated polymerizable group selected from the group of (meth)acrylate ester containing groups;
d) copolymerizing the repeating monomeric units of steps a), b) and optionally c) in a solvent comprising a combination of water and an organic solvent, thereby forming a copolymer; and
e) reacting a sultone with the copolymer resulting from step d).

15. Use of an amphiphilic copolymer according to any of claims 1 to 11 or a protective coating composition according to any of claim 12 or 13 for protecting a hard surface which typically comprises a material selected from the group consisting of metal and glass, in particular glass.
